## Europäisches Patentamt

## European Patent Office

## Office européen des brevets

(19) 

(11) Numéro de publication: **0 204 593**
**B1**

(12) **FASCICULE DE BREVET EUROPEEN**

(45) Date de publication du fascicule du brevet:
01.08.90

(51) Int. Cl.⁵: **H04N 1/40**

(21) Numéro de dépôt: **86400909.7**

(22) Date de dépôt: **24.04.86**

(54) **Procédé de réglage de l'échelle des gris dans la reproduction d'images numérisées, et système mettant en oeuvre ce procédé.**

(30) Priorité: **10.05.85 FR 8507150**

(43) Date de publication de la demande:
**10.12.86 Bulletin 86/50**

(45) Mention de la délivrance du brevet:
**01.08.90 Bulletin 90/31**

(84) Etats contractants désignés:
**DE GB NL**

(73) Titulaire: **GENERAL ELECTRIC CGR S.A., 100, rue Camille-Desmoulins, F-92130 Issy les Moulineaux(FR)**

(72) Inventeur: **Klausz, Rémy, c/o Thomson-CSF SCPI 19, avenue de Messine, F-75008 Paris(FR)**

(74) Mandataire: **Ballot, Paul Denis Jacques, Cabinet Ballot-Schmit 7, rue le Sueur, F-75116 Paris(FR)**

(56) Documents cités:
**GB-A- 2 129 635**

**OPTICAL ENGINEERING,**
vol. 21, no. 5, septembre/octobre 1982, pages 841-846, Bellingham, Washington, US; D.E. TROXEL et al.: "Interactive enhancement of tone scale"

## Description

L'invention concerne un procédé de réglage de l'échelle des gris dans la reproduction d'images numérisées, notamment des images de radiologie pour lesquelles il est souhaitable de visualiser les informations numériques représentatives de l'image à travers une "fenêtre de gris" de caractéristiques déterminées par l'utilisateur. L'invention concerne plus précisément l'élaboration des paramètres de cette fenêtre. L'invention concerne aussi un système de traitement d'images numérisées mettant en oeuvre ce procédé.

Dans les systèmes de radiologie numérique où les images acquises sont transmises et traitées sous forme numérique, pixel par pixel, la dynamique des moyens d'acquisition est notablement plus importante que la capacité de l'oeil à distinguer deux niveaux de gris voisins. Autrement dit, à un grand nombre de valeurs numériques acquises possibles, on ne peut faire correspondre qu'un nombre limité de nuances de gris. Par ailleurs, pour un examen radiologique donné, seule une partie des informations contenues dans l'image numérisée est utile pour l'examen ; elle correspond par exemple à une certaine plage d'absorption des rayons X par les structures que l'on désire observer. Dans ce contexte, il est connu de visualiser l'image par l'intermédiaire d'une "fenêtre de gris" consistant à faire correspondre la totalité de l'échelle des niveaux de gris à la plage de valeurs numériques utile pour l'examen en cours. Autrement dit, toutes les valeurs en deçà ou au-delà de cette plage sont respectivement représentées sans distinction par du noir ou du blanc (ou inversement) tandis que la plage utile des valeurs numériques de l'image est reproduite par toutes les nuances de gris discernables. La loi de correspondance entre les valeurs numériques de la plage choisie et les nuances de gris peut être quelconque, elle est généralement linéaire. Bien entendu, suivant le type d'examen, le radiologue doit ajuster les caractéristiques de la "fenêtre", c'est-à-dire déterminer les limites de la plage des valeurs numériques qu'il désire visualiser. Ces réglages se font le plus souvent manuellement en vérifiant en permanence, par exemple sur un écran de télévision, l'aspect de l'image après son fenêtrage. Il est usuel, par exemple, de caractériser la fenêtre par deux paramètres qui sont appelés : niveau moyen et largeur. La largeur de la fenêtre représente le nombre de valeurs numériques qui seront effectivement transcrites en nuances de gris, ce paramètre est donc représentatif du contraste, celui-ci étant d'autant plus élevé que la largeur de la fenêtre est faible. Le niveau moyen est donné par la valeur numérique de l'image acquise à laquelle on associe la nuance moyenne de l'échelle des gris. Ce niveau moyen est donc choisi en fonction de la nature des structures à examiner. Ces deux paramètres font l'objet de modifications très fréquentes de la part de l'utilisateur, afin d'examiner le contenu de l'image de façon exhaustive. Les installations de visualisation comportent donc des moyens de commande de variation de ces deux paramètres qui comportent, en façade, des organes d'actionnement tels que boutons-poussoirs ou boutons rotatifs, associés à des circuits générateurs d'impulsions. Chaque impulsion engendrée est exploitée par l'électronique de commande pour modifier la largeur ou le niveau moyen d'une valeur prédéterminée. Cette variation élémentaire est difficile à déterminer. En effet, pour une largeur importante, c'est-à-dire à faible contraste, seule une variation importante de niveau moyen est significative. En revanche, pour une faible largeur (fort contraste) une variation minime du niveau moyen a des conséquences très visibles sur l'écran de contrôle. Autrement dit, un choix donné de variation élémentaire des paramètres, constituant un compromis entre les deux situations extrêmes décrites ci-dessus, l'utilisateur peut avoir l'impression désagréable de perdre du temps à actionner les boutons de commande du niveau moyen lorsque le contraste est faible, sans que les modifications de l'image soient significatives alors qu'à fort contraste, la même variation élémentaire de niveau moyen provoquera des modifications trop importantes de l'image avec le risque d'empêcher la visualisation d'une configuration intermédiaire révélant des détails cliniquement importants. Jusqu'à présent, on a tenté de remédier à ce problème en prévoyant plusieurs jeux de touches permettant de sélectionner un certain nombre de valeurs de variation élémentaire mais cette multiplication des organes de commande augmente les risques de confusion et de fausses manœuvres car l'attention de l'utilisateur est sans cesse portée sur l'écran de contrôle et non sur les organes de commande.

L'invention permet de résoudre le problème analysé ci-dessus en réduisant au strict minimum le nombre d'organes d'actionnement pour le réglage de la fenêtre. Par le brevet GB-A 2 129 635, il est connu un système (figure 2) pour corriger le niveau de gris moyen d'une image vidéo par un circuit "f (a) LOGIC" (29) ou "f (b) LOGIC" (206) en calculant le niveau de gris moyen et en comparant la valeur calculée f (b) à une valeur souhaitée qui est affichée par l'utilisateur. Par ailleurs, le système est également prévu pour corriger la distribution des températures en calculant la dispersion f (a) de l'histogramme par rapport au niveau de gris moyen et en comparant cette valeur calculée f (a) à une valeur souhaitée qui est affichée par l'utilisateur. Dans ce système, il n'y a pas de variation du niveau de gris moyen f (b) en fonction de la dispersion f (a) en températures mais, au contraire, un calcul de la dispersion f (a) en tenant compte de f (b).

L'invention concerne un procédé de réglage de l'échelle des gris dans la reproduction d'une image numérisée, par exemple une image de radiologie, cette reproduction comprenant notamment l'étape consistant à transposer les valeurs numériques représentatives des éléments de l'image à travers une fenêtre de gris définie par un paramètre dit de nouveau moyen et un paramètre dit de largeur de fenêtre, chaque paramètre n'ayant qu'une valeur à un instant donné, caractérisé en ce que la variation de la valeur du paramètre de niveau moyen est une fonction de la valeur du paramètre de largeur de fenêtre.

Les paramètres de niveau moyen et de largeur de fenêtre sont modifiables par une succession de commandes élémentaires. Par ailleurs, la variation du paramètre de niveau moyen en fonction de la valeur du paramètre de largeur de fenêtre est effectuée au moment de chaque commande élémentaire.

La commande élémentaire de réglage du paramètre de niveau moyen consiste à ajouter ou retrancher à sa valeur une quantité proportionnelle au paramètre de largeur de fenêtre au moment de ladite commande élémentaire, le facteur de proportionnalité étant constant.

Pour chaque commande élémentaire de réglage du paramètre de largeur de fenêtre, la nouvelle valeur de celui-ci est obtenue en faisant le produit de l'ancienne valeur par un coefficient prédéterminé. Selon le sens de variation voulu, le coefficient est par exemple un nombre donné k ou son inverse 1/k.

L'invention concerne également un système de traitement d'image numérisée comportant une table d'équivalence des gris ou analogue intercalée entre des moyens de lecture d'une mémoire image et un convertisseur Numérique-Analogique et des moyens d'écriture pour modifier le contenu de ladite table d'équivalence, caractérisé en ce qu'il comporte des moyens de calcul connectés pour piloter lesdits moyens d'écriture à partir d'un paramètre de niveau moyen et un paramètre de largeur de fenêtre déterminés par des circuits d'élaboration respectifs, ces circuits étant pilotés par des moyens de commande de variation respectifs et en ce que le circuit d'élaboration du paramètre de niveau moyen comporte un opérateur couplé à la sortie du circuit d'élaboration du paramètre de largeur de fenêtre.

L'invention apparaîtra plus clairement à la lumière de la description qui va suivre d'un système conforme à son principe, donnée uniquement à titre d'exemple, et faite en référence aux dessins annexés dans lesquels:

- la figure 1 est un schéma-bloc d'une partie d'une installation de visualisation d'image numérisée conforme à l'invention;
- la figure 2 est un graphe illustrant le fenêtrage de l'échelle des gris que l'on doit faire subir à l'image avant sa reproduction.

En se reportant aux dessins, on a représenté une mémoire image I dont l'entrée E est reliée à des moyens d'acquisition numérique d'une image, ici dans une installation de radiologie. La sortie S de cette mémoire est reliée à des moyens de lecture 10 agencés pour redresser des valeurs lues dans la mémoire à une table d'équivalence des gris T dont la sortie est reliée à des moyens de visualisation tels que par exemple un moniteur de télévision 11, par l'intermédiaire d'un convertisseur Numérique-Analogique 12. Les valeurs numériques contenues dans la mémoire I sont représentatives des pixels de l'image et parviennent en tant qu'adresses à l'entrée d'adressage Ea de la table d'équivalence T. C'est donc le contenu de cette table qui réalise le fenêtrage conforme à la figure 2. La table T est associée à des moyens d'écriture E agencés pour charger toutes ses valeurs en un temps très court, de l'ordre du retour trame du moniteur de télévision 11. Ces moyens d'écriture comportent des moyens d'élaboration de la courbe de la figure 2 dès lors qu'on leur fournit deux paramètres, un premier paramètre dit de niveau moyen et un second paramètre dit de largeur. L'agencement qui vient d'être décrit jusqu'à présent est classique, sa conception est donc à la portée de l'homme du métier. Les moyens d'écriture E sont donc mis en œuvre par des moyens de calcul 13 qui lui fournissent, en tant que données, les valeurs des deux paramètres précités. Les moyens d'écriture comportent donc à cet effet deux entrées, une entrée 14 où est appliqué le paramètre de niveau moyen et une entrée 15 où est appliqué le paramètre de largeur. Dans cet exemple, l'invention se situe plus particulièrement dans la structure des moyens de calcul 13 des deux paramètres.

En se reportant plus particulièrement au graphe de la figure 2, on a indiqué en abscisse les niveaux N de l'image numérisée tels qu'ils sont effectivement stockés dans la mémoire I et en ordonnée les valeurs possibles de l'échelle des gris, évoluant entre une valeur minimum $G_o$ et une valeur maximum $G_{max}$, ces valeurs étant les valeurs extrêmes appliquées au convertisseur Numérique-Analogique 11. Le niveau moyen M se définit donc comme étant la valeur numérique de la mémoire image I (portée en abscisse) à laquelle la table T fait correspondre une nuance de gris d'ordonnées

$$\frac{G_{max} - G_o}{2}.$$

Toute modification du niveau moyen se traduit donc par un déplacement du point P le long de l'axe des abscisses. Par ailleurs, la largeur L est représentée par l'intervalle occupé en abscisse par la partie linéaire de la courbe, c'est-à-dire $N_{max}$ - $N_{min}$. Le rôle des moyens d'écriture est donc de transcrire dans la table T la courbe de la figure 2 pour faire correspondre à chaque valeur numérique possible de la mémoire image I, une valeur possible définie par le fenêtrage. Ainsi, toutes les valeurs de la mémoire I comprises entre 0 et $N_{min}$ seront indiscernables sur l'écran du moniteur de télévision 11 et reproduites par exemple en noir, toutes les valeurs de la mémoire I supérieures à $N_{max}$ seront aussi indiscernables et reproduites par exemple en blanc tandis qu'on associera une certaine nuance de gris aux valeurs numériques comprises entre $N_{min}$ et $N_{max}$.

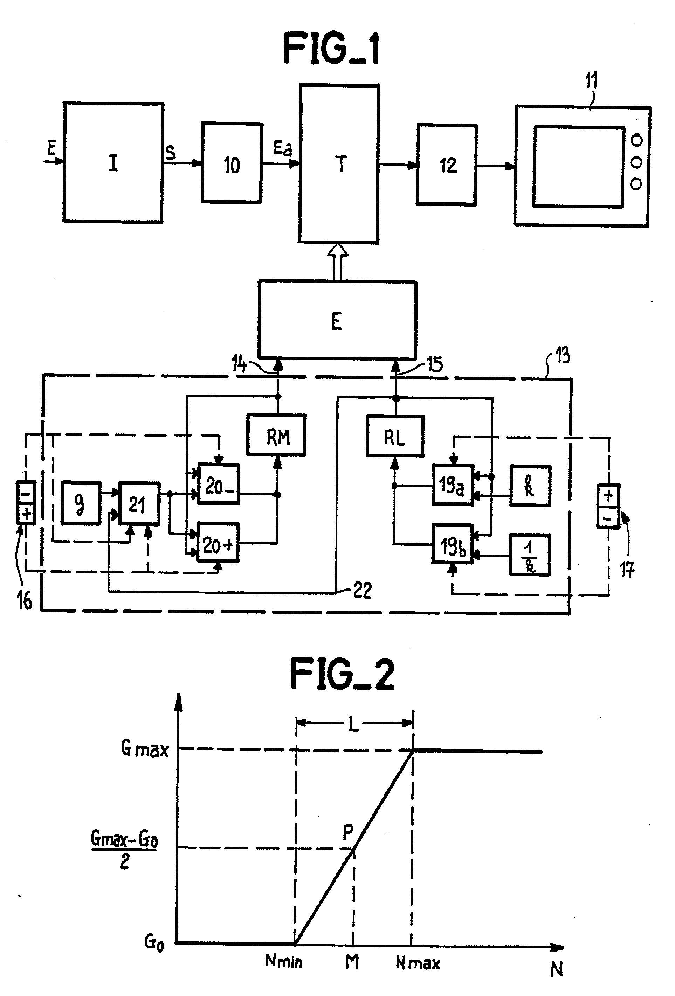

En se reportant de nouveau à la figure 1, le circuit de calcul 13 chargé de réactualiser les valeurs de M et L en fonction des manoeuvres de l'opérateur est piloté par deux groupes de deux touches ±, respectivement les touches 16 pour la modification de la valeur moyenne M et les touches 17 pour la modification de la largeur L. Ces groupes de touches sont donc associés à deux circuits d'élaboration de paramètres distincts l'un pour le premier paramètre dit de valeur moyenne et l'autre pour le second paramètre dit de largeur. Les valeurs de ces deux paramètres sont respectivement réactualisées dans deux registres RM et RL périodiquement "consultés" par les moyens d'écriture E pour l'élaboration du chargement des valeurs de la table T. On supposera par exemple que les touches 16 et 17 sont associées à des circuits générateurs d'impulsions (non représentés), chaque impulsion étant prise en compte par le circuit de calcul 13 comme un ordre d'incrémentation ou de décrémentation du paramètre L ou M correspondant. Tous les composants du circuit de calcul 13 sont des circuits chargés d'élaborer des opérations simples comme des additions, des soustractions ou des multiplications. L'homme du métier peut facilement les concevoir ou se procurer de tels sous-ensembles. Selon une particularité avantageuse de l'invention, la loi de progression de la largeur L (en fonction du nombre d'impulsions délivrées par l'une des touches 17) est logarithmique. On entend par là que toute nouvelle valeur de L est le produit de l'ancienne valeur par un facteur constant k (k étant un nombre relatif supérieur à 1), si on veut augmenter cette largeur, ou 1/k si on désire la réduire. Par conséquent, chaque touche 17 +, 17 - est reliée à une entrée de pilotage d'un multiplicateur 19a, 19b, respectivement. Une entrée de donnée de chaque multiplicateur est reliée à la sortie du registre RL tandis que l'autre entrée de donnée est reliée à un autre registre formant mémoire, renfermant le facteur k ou 1/k, respectivement. Les sorties des deux multiplicateurs sont reliées à l'entrée du registre RL. Tous ces composants forment le circuit d'élaboration du second paramètre précité.

Par ailleurs, chaque touche 16 - et 16 + est reliée à une entrée de pilotage d'un soustracteur 20 - et d'un additionneur 20 +, respectivement. Une entrée de donnée de chaque additionneur ou soustracteur est reliée à la sortie du registre RM tandis que son autre entrée de donnée est reliée à la sortie d'un multiplicateur 21. Une entrée de donnée de ce multiplicateur, qui constitue l'opérateur mentionné ci-dessus, est reliée à un registre formant mémoire renfermant un facteur g prédéterminé tandis que son autre entrée de donnée est reliée à la sortie du registre RL par une liaison 22. L'agencement du multiplicateur 21, du registre g et de la liaison 22, est spécifique de l'invention puisqu'il réalise le produit g.L à chaque actionnement d'une touche 16 + ou 16 -. Ce produit est ensuite ajouté ou soustrait de la valeur précédente du niveau moyen M par l'additionneur 20 + ou le soustracteur 20 - selon que la touche 16 + ou 16 - a été sollicitée par l'opérateur. Tous ces composants forment le circuit d'élaboration du premier paramètre précité.

Le fonctionnement du système qui vient d'être décrit est simple et découle avec évidence de la description qui précède. Dans un mode de réalisation concret, le facteur g pourra être de l'ordre de 1/8 tandis que le facteur k pourra être choisi entre 1,25 à 1,30, ces valeurs n'étant nullement limitatives. L'exemple de réalisation qui vient d'être décrit en référence à la figure 1 peut bien sûr comporter de nombreuses variantes et l'invention n'est pas limitée à un mode de réalisation entièrement câblé. En particulier, les opérations assurées par le circuit de calcul 13 et les moyens d'écriture E peuvent être en partie ou en totalité transcrites dans un programme. C'est dire que l'invention n'est pas limitée à l'exemple décrit mais comprend tous les équivalents dans la limite des revendications qui suivent.

## Revendications

1. Procédé de réglage de l'échelle des gris dans la reproduction d'une image numérisée, par exemple une image de radiologie, cette reproduction comprenant notamment l'étape consistant à transposer (T) les valeurs numériques représentatives des éléments de l'image à travers une fenêtre de gris définie par un paramètre dit de niveau moyen (M) et un paramètre dit de largeur de fenêtre (L), chaque paramètre n'ayant qu'une valeur à un instant donné, caractérisé en ce que la variation de la valeur du paramètre de niveau moyen (M) est une fonction de la valeur du paramètre de largeur de fenêtre (L).

2. Procédé selon la revendication 1, caractérisé en ce que les paramètres de niveau moyen (M) et de largeur de fenêtre (L) sont modifiables par une succession de commandes élémentaires (16, 17) et en ce que ladite variation du paramètre de niveau moyen (M) en fonction de la valeur du paramètre de largeur de fenêtre (L) est effectuée au moment de chaque commande élémentaire.

3. Procédé selon la revendication 2, caractérisé en ce qu'il consiste, pour une commande élémentaire de réglage du paramètre de niveau moyen (M) à ajouter ou retrancher (20+, 20-) à sa valeur une quantité proportionnelle au paramètre de largeur de fenêtre (L) au moment de ladite commande élémentaire, le facteur de proportionnalité (9) étant constant.

4. Procédé selon la revendication 2 ou 3, caractérisé en ce que, pour chaque commande élémentaire de réglage du paramètre de largeur de fenêtre (L), la nouvelle valeur de celui-ci est obtenue en faisant le produit de l'ancienne valeur par un coefficient (k, 1/k) prédéterminée.

5. Procédé selon la revendication 4, caractérisé en ce que ledit coefficient prédéterminé est différent selon le sens de variation voulu du paramètre de largeur de fenêtre (L), les deux coefficients correspondants étant par exemple un nombre donné (k) et son inverse (1/k).

6. Système de traitement d'image numérisée comportant une table d'équivalence des gris (T) ou analogue intercalée entre des moyens de lecture (10) d'une mémoire image (1) et un convertisseur Numérique-Analogique (12) et des moyens d'écriture (E) pour modifier le contenu de ladite table d'équivalence, caractérisé en ce qu'il comporte des moyens de calcul (13) connectés pour piloter lesdits moyens d'écriture (E) à partir d'un paramètre de niveau moyen (M) et un paramètre de largeur de fenêtre (L) déterminés par des circuits d'élaboration respectifs, ces circuits étant pilotés par des moyens de commande de variation (16, 17) respectifs et en ce que le circuit d'élaboration du paramètre de niveau moyen (M) comporte un opérateur (21) couplé à la sortie du circuit d'élaboration du paramètre de largeur de fenêtre (L).

## Claims

1. A method for regulating the gray scale in the reproduction of a digitalized image, as for instance a radiological image, said reproduction comprising more especially a stage consisting of transposing (T) the digital values representative of the elements of the image through a gray window defined by a mean level parameter (M) and a window width parameter (L), each parameter only having one value at a given instant, characterized in that the variation of the value of the mean level parameter (M) is a function of the value of the window width parameter (L).

2. The method as claimed in claim 1, characterized in that the mean level parameter (M) and the window width parameter (L) are able to be modified by a succession of elementary commands (16 and 17) and in that the said variation of the mean level parameter (M) as a function of the value of the window width parameter (L) is performed at the instant of each elementary command.

3. The method as claimed in claim 2, characterized in that, for an elementary command for regulation of the parameter of the mean level (M), the method comprises adding or subtracting (20+, 20–) to its value a quantity proportional to the parameter of the window width (L) at the time of the said elementary command, the factor of proportionality (g) being constant.

4. The method as claimed in claim 2 or claim 3, characterized in that for each elementary regulating command for the window width parameter (L) the new value of the latter is obtained by forming the product of the old value with a predetermined coefficient (k, 1/k).

5. The method as claimed in claim 4, characterized in that the said predetermined coefficient varies in accordance with the direction of required variation of the window width parameter (L), the two corresponding coefficients being for instance a given number (k) and its reciprocal (1/k).

6. A system for processing a digitalized image comprising a gray equivalent table (T) or the like placed between read means (10) for an image memory (1) and a D-A converter (12) and write means (E) in order to modify the content of the said equivalent table, characterized in that it comprises calculating means (13) connected in order to control the said write means (E) as from a mean level parameter (M) and a window width parameter (L) determined by respective processing circuits, said circuits being controlled by a variation control means (16 and 17) and in that the said processing circuit for the mean level parameter (M) comprises an operator (21) coupled with the output of the processing circuit for the window width parameter (L).

## Patentansprüche

1. Verfahren zur Einstellung der Grauwertabstufung bei der digitalen Bildreproduktion, z.B. ein Radiologie-Bild, wobei diese Reproduktion insbesondere den Schritt umfaßt, der darin besteht, daß die digitalen, für Elemente des Bildes repräsentativen Werte durch ein Grauwertfenster transponiert werden (T), welches durch einen als mittleres Niveau (M, bezeichneten Parameter sowie durch einen als Fensterbreite (L) bezeichneten Parameter definiert ist, wobei jeder Parameter nur einen bestimmten Wert zu einem bestimmten Zeitpunkt aufweist, dadurch gekennzeichnet, daß die Schwankung des Wertes des Parameters des mittleren Niveaus (M) eine Funktion des Wertes des Parameters der Fensterbreite (L) ist.

2. Verfahren nach Anspruch 1, dadurch gekennzeichnet, daß der Parameter des mittleren Niveaus (M) und der Parameter der Fensterbreite (L) durch eine Folge elementarer Steuerungen (16, 17) verändert werden können und daß die genannte Schwankung des Parameters des mittleren Niveaus (M) in Abhängigkeit von dem Wert des Parameters der Fensterbreite (L) zum Zeitpunkt jeder elementaren Steuerung erfolgt.

3. Verfahren nach Anspruch 2, dadurch gekennzeichnet, daß es für eine elementare Steuerung zur Regelung des Parameters des mittleren Niveaus (M) darin besteht, zum Zeitpunkt der elementaren Steuerung seinem Wert eine zu dem Parameter der Fensterbreite (L) proportionale Menge hinzuzufügen (20+) bzw. von ihm abzuziehen (20–), wobei der Proportionalitätsfaktor (g) konstant bleibt.

4. Verfahren nach Anspruch 2 oder 3, dadurch gekennzeichnet, daß für jede elementare Steuerung zur Regelung des Parameters der Fensterbreite (L) der neue Wert desselben dadurch erhalten wird, daß das Produkt des früheren Wertes mit einem vorbestimmten Koeffizient (k, 1/k) berechnet wird.

5. Verfahren nach Anspruch 4, dadurch gekennzeichnet, daß der vorbestimmte Koeffizient je nach der gewollten Schwankungsrichtung des Parameters der Fensterbreite (L) verschieden ist, wobei die beiden entsprechenden Koeffiziente z.B. eine bestimmte Zahl (k) und ihr Kehrwert (1/k) sind.

6. System zur Verarbeitung eines digitalen Bildes, mit einer Äquivalenz-Tafel der Grauwerte (T) oder ähnlicher Werte, die zwischen Mitteln zum Auslesen (10) eines Bildspeichers (1) und einem Digital/Analog-Wandler (12) eingefügt ist, und mit Schreibmitteln (E), um den Inhalt der Äquivalenz-Tafel zu verändern, dadurch gekennzeichnet, daß es Rechenmittel (13) umfaßt, die so geschaltet sind, um die Schreibmittel (E) ausgehend von einem Parameter eines mittleren Niveaus (M) und von einem Parameter der Fensterbreite (L) steuern, welche durch zugehörige Verarbeitungsschaltungen bestimmt werden, wobei diese Schaltungen durch zugehörige Mittel zur Steuerung der Schwankung (16, 17) gesteuert werden, und daß die Schaltung zur Verarbeitung des Parameters des mittleren Niveaus (M) einen Operator (21), der an den Ausgang der Schaltung zur Verarbeitung des Parameters der Fensterbreite (L) angekoppelt ist, umfaßt.

# FIG_1

# FIG_2